# EUROPÄISCHE PATENTSCHRIFT

(11) **EP 2 183 064 B1**
(45) Veröffentlichungstag und Bekanntmachung des Hinweises auf die Patenterteilung: **30.04.2014**
(21) Anmeldenummer: 08803130.7
(22) Anmeldetag: 21.08.2008
(51) Int. Cl.: B21B 38/00

(54) **WARMWALZSTRASSE UMFASSEND EINE HASPEL UNE EINE VORRICHTUNG ZUR ERMITTLUNG EINER TEMPERATUR EINES WARMWALZGUTES UND VERFAHREN ZUR STEUERUNG UND/ODER REGELUNG EINER TEMPERATUR EINES WARMWALZGUTS**
HOT ROLLING MILL COMPRISING A COILER AND A DEVICE FOR DETERMINING A TEMPERATURE OF A HOT-ROLLED MATERIAL AND METHOD FOR THE OPEN-LOOP AND/OR CLOSED-LOOP CONTROL OF A TEMPERATURE OF A HOT-ROLLED MATERIAL
CAGE DE LAMINAGE A CHAUD COMPRENANT UN ENROULEUR ET UN DISPOSITIF POUR DÉTERMINER UNE TEMPÉRATURE D'UN PRODUIT LAMINÉ À CHAUD, ET PROCÉDÉ DE COMMANDE ET/OU DE RÉGULATION D'UNE TEMPÉRATURE D'UN PRODUIT LAMINÉ À CHAUD

(30) Priorität: 07.09.2007 DE 102007042560
(43) Veröffentlichungstag der Anmeldung: 12.05.2010
(73) Patentinhaber: Siemens Aktiengesellschaft, 80333 München (DE)
(72) Erfinder: BORGMANN, Udo, 91341 Röttenbach (DE); FETT, Helmut, 91056 Erlangen-Kriegenbrunn (DE); HOFER, Wolfgang, 91056 Erlangen (DE)
(86) Internationale Anmeldenummer: PCT/EP2008/060956
(87) Internationale Veröffentlichungsnummer: WO 2009/033928

(56) Entgegenhaltungen:
- WO-A-01/47647
- JP-A- 59 074 240
- JP-A- 2006 003 081
- S'ARMIENTO F ET AL: "DEUX ANS D'EXPLOITATION DU TWICE AU RECUIT CONTINU TOLES MINCES DE KESSALES" CAHIERS D'INFORMATIONS TECHNIQUES DE LA REVUE DE METALLURGIE, REVUE DE METALLURGIE. PARIS, FR, Bd. 102, Nr. 10, 1. Oktober 2005 (2005-10-01), Seiten 711-719, XP001242154 ISSN: 0035-1563

## Beschreibung

Die Erfindung betrifft eine Warmwalzstraße umfassend eine Haspel sowie eine Vorrichtung zur Ermittlung einer Temperatur eines Warmwalzgutes, mit einem Detektor zur Erfassung von, von einem Messbereich des Warmwalzgutes abgestrahlter elektromagnetischer Strahlung, mit einer Auswerteeinheit zur Bestimmung einer Temperatur aus der erfassten Strahlung, wobei der Messbereich wenigstens teilweise abgeschattet ist.

Derartige Vorrichtungen sind zur Temperaturbestimmung in industriellen Prozessen, wie etwa bei der Herstellung von metallischem Halbzeug, geeignet. Insbesondere durch eine kontaktlose Temperaturmessung ist es nicht erforderlich, einen Produktionsprozess zur Bestimmung einer Temperatur zu unterbrechen. Vielmehr kann eine Temperaturmessung online während des Produktionsprozesses durchgeführt werden.

Insbesondere im Bereich der Warmwalztechnik sind exakte Kenntnisse über die aktuelle Walzguttemperatur hochrelevant. Um ein gewünschtes Gefüge eines Walzguts einzustellen ist unter anderem das Einhalten von bestimmten Temperaturen von essentieller Bedeutung. Eine Temperaturmessung mit hoher Messgenauigkeit ist daher in hohem Maße erwünscht. Denn dies erlaubt eine Regelung der Temperatur möglichst derart, dass ein gewünschtes Ergebnis, i.d.R. bestimmte Eigenschaften des Walzguts, z.B. Dicke, Gefüge, Profil, etc..., erreicht wird.

Eine Temperaturmessung mit hoher Genauigkeit ist durch eine kontaktbehaftete Messung der Temperatur zu erreichen. Nachteilig hierbei ist es, dass zur Temperaturmessung der Produktionsfluss i.d.R. unterbrochen werden muss. Dies führt zu Durchsatzeinbußen.

Alternativ können Vorrichtungen zur kontaktlosen Messung einer Temperatur, wie etwa aus der Offenlegungsschrift KR 2003018725 A bekannt, verwendet werden. Bei der in der Offenlegungsschrift gezeigten Vorrichtung wird die Temperatur in einem Dünnbandgießprozess in Echtzeit, kontaktlos gemessen. Die offenbarte Vorrichtung umfasst eine Kamera zur Ablichtung des Bandes, einen optischen Filter, eine Kamera zur Erfassung thermischer Strahlung, einen Infrarot-Filter sowie eine Bildprozessor.

Nachteil einer derartigen Vorrichtung ist es, dass die Messgenauigkeit der Temperatur verglichen mit einer kontaktbehafteten Messung signifikant reduziert ist.

Aus dem Aufsatz S'ARMIENTO F ET AL: "DEUX ANS D'EXPLOITATION DU TWICE AU RECUIT CONTINU TOLES MINCES DE KESSALES", CAHIERS D'INFORMATIONS TECHNIQUES DE LA REVUE DE METALLURGIE, REVUE DE METALLURGIE. Paris, FR, Bd. 102, Nr. 10, 01. Oktober 2005 (2005-10-01), Seiten 711-719, XP001242154, ISSN: 0035-1563 sowie aus der Offenlegungsschrift JP 2006 003081 A (NIRECO CORP) 05. Januar 2006 (2006-01-05) ist eine Temperaturmessung für einen abgeschatteten Bereich zu entnehmen, welcher durch ein warmes Walzgut und eine Rolle gebildet wird.

Der Erfindung liegt die Aufgabe zugrunde, eine Vorrichtung für eine Warmwalzstraße und ein Verfahren bereitzustellen, mit welchen die Erfassung der Temperatur bei hohem Durchsatz vereinfacht ist.

Der vorrichtungsmäßige Teil der Aufgabe wird durch eine Warmwalzstraße der eingangs genannten Art dadurch gelöst, dass der abgeschattete Teil des Messbereichs durch eine zwischen einem auf- oder abzuhaspelnden Abschnitt und einem aufgehaspelten Abschnitt des Warmwalzguts angeordnete Schattenfuge gebildet ist. Bei der kontaktlosen Messung ist die Kenntnis des Emissionsfaktors des elektromagnetische Strahlung abstrahlenden Warmwalzguts in der Regel problematisch.

Durch die vorliegende Erfindung wird es ermöglicht, wenigstens abschnittsweise einen Emissionsfaktor von näherungsweise 1 für den abgeschatteten Teil des Warmwalzguts möglichst fehlerfrei anzunehmen. Das abgeschattete Walzgut weist somit im abgeschatteten Bereich im Wesentlichen einen Emissionsfaktor eines schwarzen Körpers auf. Unter schwarzem Körper wird ein Körper verstanden, welcher jegliche auf ihn auftreffende Strahlung absorbiert. Aufgrund seiner thermischen Energie gibt der schwarze Körper Strahlung einer bestimmten Intensität und spektraler Verteilung - thermische Emission - ab. Aus dieser kann auf die Temperatur des schwarzen Körpers zurückgeschlossen werden. Es wird eine Vorrichtung bereitgestellt, bei welcher bei kontaktloser Messung der Temperatur eines Warmwalzguts die Messgenauigkeit der Temperatur erhöht ist.

Indem der Messebereich wenigstens teilweise abgeschattet ist, kann das Warmwalzgut in diesem abgeschatteten Bereich näherungsweise als schwarzer Körper angesehen werden. Da im abgeschatteten Bereich keine Strahlung auf das Warmwalzgut auftrifft und somit reflektiert werden kann, weist der abgeschattete Bereich des Warmwalzguts im Wesentlichen einen Emissionsfaktor eines Schwarzen Körpers auf, d.h. näherungsweise 1. Die Temperaturmessung weist somit eine hohe Messgenauigkeit auf. Die erfasste Strahlung aus dem wenigstens teilweise abgeschatteten Messbereich entspricht somit der thermischen Energie des Warmwalzguts. Aus der vom Warmwalzgut im abgeschatteten Bereich abgestrahlten Strahlung ist somit die Temperatur des Warmwalzguts kontaktlos mit signifikant verringertem Fehler ermittelbar. Der Emissionsfaktor für den erfindungsgemäß abgeschatteten Bereich des Warmwalzguts ist gut bekannt und weist somit deutlich weniger Fehler auf, als ein gemäß Stand der Technik ermittelter oder angenommener Emissionsfaktor. Die Messgenauigkeit der kontaktlosen Temperaturmessung wird signifikant erhöht.

Ein Punkt oder ein Bereich des Warmwalzguts wird im Rahmen dieser Anmeldung dann als abgeschattet angesehen, wenn von einem abgeschatteten Punkt oder Bereich des Warmwalzguts im Wesentlichen keine nicht der thermischen Strahlung des Warmwalzguts zugeordnete Strahlung in den Detektor gelangt. In einer bevorzugten Variante trifft im abgeschatteten Bereich des Warmwalzguts im Wesentlichen keine elektromagnetische Strahlung von außen auf die Oberfläche des Warmwalzguts auf. Dadurch kann auch keine nicht-thermisch bedingte elektromagnetische Strahlung vom abgeschatteten Bereich des Warmwalzguts in den Detektor reflektiert werden. Der letztgenannte Zustand kann bspw. mittels einer gesonderten, baulichen Abschattungseinrichtung ermöglicht werden, welcher das Warmwalzgut an einer bestimmten Stelle beschattet.

Unter Messbereich wird im Rahmen dieser Anmeldung derjenige Bereich verstanden, von welchem das Warmwalzgut elektromagnetische Strahlung emittiert und durch den Detektor erfasst ist.

In einer vorteilhaften Ausgestaltung der Erfindung ist der Messbereich wenigstens teilweise durch das Warmwalzgut abgeschattet. Dadurch wird die Messgenauigkeit der Temperatur weiter gesteigert.

In einer bevorzugten Ausgestaltung der Erfindung ist der abgeschattete Teil des Messbereichs durch eine zwischen einem auf- oder abzuhaspelnden Abschnitt und einem aufgehaspelten Abschnitt des Warmwalzguts angeordnete Schattenfuge gebildet. Hierbei erfolgt die Abschattung in Gänze durch das Walzgut selbst. Eine derartig gebildete Schattenfuge weist in besonderem Maße Eigenschaften eines schwarzen Körpers auf, wodurch die Temperaturmessung besonders genau erfolgen kann. Hier wird in der Praxis ein Emissionsfaktor von im Wesentlichen 1 realisiert. Ferner sind hier keine zusätzlichen baulichen Maßnahmen zur Erzeugung einer Abschattung eines Messbereichs erforderlich. Durch eine derartige Ausgestaltung der Erfindung wird ohne Mehraufwand die kontaktlose Temperaturmessung für das Warmwalzgut signifikant verbessert.

In einer alternativen Ausgestaltung der Erfindung ist der abgeschattete Teil des Messbereichs durch eine zwischen einem Warmwalzgut und einem Führungselement für das Warmwalzgut angeordnete Schattenfuge gebildet. Dies erlaubt ebenfalls eine Temperaturmessung mit erhöhter Messgenauigkeit. Als Führungselemente, welche die Schattenfuge zusammen mit Warmwalzgut ausbilden, können bspw. Rollen, insbesondere Führungsrollen, Umlenkrollen, Transportrolle, Treiberrollen, oder auch andere Führungselement, mit welchen das Warmwalzgut eine Schattenfuge bildet, vorgesehen werden. Auch hier tritt ein kombinatorischer Effekt auf, welcher es erlaubt, ohne zusätzliche Mittel, unter Ausnutzung einer zwischen Warmwalzgut und Führungselementen gebildeten Schattenfuge, eine verbesserte Temperaturmessung durchzuführen.

In einer weiteren vorteilhaften Ausführungsform der Erfindung ist der Messbereich des Detektors linien- oder flächenförmig ausgebildet. Insbesondere kann der erfassbare Messbereich des Detektors in Abhängigkeit von seiner Anordnung relativ zum Warmwalzgut einstellbar sein. Indem der Messbereich linien- oder flächenförmig ausgebildet ist, können herkömmliche Detektoren zur Erfassung von elektromagnetischer Strahlung verwendet werden. Diese sind relativ kostengünstig.

In einer bevorzugten Ausführungsvariante der Erfindung ist der Detektor zur ortsaufgelösten Erfassung der vom Messbereich abgestrahlten Strahlung ausgebildet. Dadurch können Intensitätsschwankung der abgestrahlten elektromagnetischen Strahlung vom Warmwalzgut ortsaufgelöst erfasst werden. Die ortsaufgelöste Erfassung der Strahlung erlaubt es wiederum, bspw. Orte mit höchster relativer Strahlungsintensität bei im Wesentlichen gleichzeitig erfasster Strahlung zu ermitteln. Dies ist von Bedeutung, da kein Körper stärker strahlt als ein schwarzer Körper. Durch die Auswahl der Orte mit der höchsten relativen Strahlungsintensität können somit diejenigen Stellen am Warmwalzgut lokalisiert werden, deren Eigenschaften am besten mit den Eigenschaften eines schwarzen Körpers, insbesondere hinsichtlich Emissionsfaktor, übereinstimmt. Ein derartiges Vorgehen ist insbesondere auch dann erforderlich, wenn der Messbereich nur teilweise abgeschattet ist. Die Strahlung aus den nicht abgeschatteten Bereichen des Warmwalzguts wird bevorzugt nicht zur Bestimmung der Temperatur herangezogen, da diese die Messgenauigkeit der Temperatur verringert.

In einer besonders vorteilhaften Ausgestaltung der Erfindung ist die Auswerteeinheit zur Ermittlung eines Ortes einer höchsten Strahlungsintensität aus der ortsaufgelöst erfassten Strahlung sowie zur Ermittlung einer Temperatur aus einer diesem Ort zugeordneten Strahlung ausgebildet. Dies erlaubt, den Ort der höchsten Strahlungsintensität des Warmwalzguts bzw. der vom Detektor erfassten Strahlung zu bestimmen. Mit diesem Ort kann dann bspw. mittels des Wienschen Verschiebungsgesetztes oder des Stefan-Boltzmann-Gesetzes anhand der erfassten Strahlung eine Temperatur des Warmwalzguts ermittelt werden. Dadurch, dass innerhalb des erfassten Messbereichs eine weitere Auswahl hinsichtlich des auszuwertenden Strahlungsanteils erfolgt, kann die Genauigkeit der Temperaturmessung weiter gesteigert werden.

In einer vorteilhaften Ausgestaltung der Erfindung ist der Detektor zur spektralen Erfassung der vom Messbereich abgestrahlten Strahlung ausgebildet. Indem eine spektrale Erfassung der Strahlung erfolgt, kann das Wiensche Verschiebungsgesetz zur Ermittlung der Temperatur aus dem Strahlungsspektrum ohne Probleme angewandt werden. Die Temperatur kann somit einfach aus der erfassten Strahlung ermittelt werden. Insbesondere kann vorteilhaft vorgesehen werden, dass der Detektor die Strahlung ortsaufgelöst und spektral aufgelöst erfasst. Dadurch kann bspw. ein Ort der höchsten Strahlungsintensität ermittelt werden und anschließend das Spektrum für diesen Ort zur Bestimmung der Temperatur herangezogen werden. Dies liefert eine hohe Messgenauigkeit für die Temperaturbestimmung.

Vorteilhaft ist es ferner, dass der Detektor zur Erfassung von Infrarot-Strahlung ausgebildet ist. Der relevante Strahlungsanteil zur Bestimmung der Temperatur des Warmwalzguts ist bei Warmwalzgut in der Regel in dem als infrarot bezeichneten Spektralbereich der elektromagnetischen Strahlung aufzufinden. Insbesondere, wenn das Wiensche Verschiebungsgesetz zur Bestimmung der Temperatur verwendet wird, ist es lediglich erforderlich, diejenige Wellenlänge zu ermitteln, bei welcher bspw. der erfasste Spektralbereich sein Maximum aufweist. Diese dem Maximum zugeordnete Wellenlänge ist bei Warmwalzgut in der Regel im Infrarotbereich zu finden. Diese Information kann somit üblicherweise mittels eines Infrarot-Detektors ohne größere Schwierigkeiten bereitgestellt werden.

In einer vorteilhaften Ausgestaltung der Erfindung ist eine Kühleinrichtung zur Kühlung des Detektors und/oder der Auswerteeinheit vorhanden. Dadurch kann der Detektor und/oder die Auswerteeinheit auch an widrigen Einsatzorten, insbesondere mit widrigen Umgebungstemperaturen, angeordnet und betrieben werden. Dies ist insbesondere von Bedeutung bei der Bestimmung der Temperatur von Warmwalzgut, da hier das Warmwalzgut Temperaturen von mehr als 1000°C aufweisen kann. Aufgrund der hohen Temperaturen in der Umgebung des Warmwalzguts ist hier ein Betrieb eines Detektors nicht ohne weiteres dauerhaft möglich. Dieses Problem wird durch die Kühleinrichtung behoben.

Der verfahrensmäßige Teil der Aufgabe wird gelöst durch ein Verfahren zur Steuerung und/oder Regelung einer Temperatur eines Warmwalzguts bei einer solchen Warmwalzstraße. Hierbei wird an einem ersten Warmwalzgutbezugspunkt eine Ist-Temperatur des Warmwalzguts für einen zweiten Warmwalzgutbezugspunkt ermittelt, wobei durch Vergleich der Ist-Temperatur mit einer Soll-Temperatur des Warmwalzguts am zweiten Warmwalzgutbezugspunkt eine Stellgröße zur Beeinflussung der Temperatur des Warmwalzguts am ersten Warmwalzgutbezugspunkt ermittelt wird, und die Temperatur des ersten Warmwalzgutbezugspunkts mittels der Stellgröße gesteuert und/oder geregelt wird, wobei die Ist-Temperatur mittels der oben beschriebenen Vorrichtung ermittelt wird. Insbesondere wird der erste Warmwalzgutbezugspunkt vorzugsweise nahe der Haspel gewählt, so dass mit der Temperatur des ersten Warmwalzgutbezugspunkts ein Maß für die Aufhaspeltemperatur des Warmwalzguts erhalten wird. Der erste und der zweite Warmwalzgutbezugspunkt können verschieden oder vorzugsweise identisch sein.

Anhand der am zweiten Warmwalzgutbezugspunkt erfassten Temperatur wird eine den Prozess beeinflussende Stellgröße ermittelt, insbesondere wird vorzugsweise eine Stellgröße beeinflusst, mit welcher die Warmwalzgutgeschwindigkeit und/oder die Aufhaspelgeschwindigkeit einstellbar ist.

Durch die Verwendung der erfindungsgemäßen Vorrichtung zur Ermittlung der Temperatur für ein Verfahren zur Steuerung und/oder Regelung einer Temperatur eines Warmwalzguts wird die Regelung bei gleichzeitig hohem Warmwalzgutdurchsatz verbessert.

Weitere Vorteile der Erfindung ergeben sich aus den nachfolgenden Ausführungsbeispielen, welche anhand der schematisch dargestellten Zeichnungen näher erläutert werden. Es zeigen:
- FIG 1: Seitenansicht eines Endbereichs einer Warmwalzstraße mit einer Vorrichtung zur Temperaturermittlung mit Hilfe einer gesonderten Abschattungseinrichtung,
- FIG 2: eine Seitenansicht eines Endbereichs einer Warmwalzstraße mit einer Führungsrolle und einer nahe der Führungsrolle angeordnete Vorrichtung zur Temperaturermittlung,
- FIG 3: eine Haspel mit einer durch Warmband gebildeten Schattenfuge,
- FIG 4: eine Seitenansicht eines Endbereichs einer Warmwalzstraße mit einer Vorrichtung zur Temperaturermittlung an einer Haspel,
- FIG 5: eine Draufsicht auf einen Endbereich einer Warmwalzstraße mit einer Vorrichtung zur Temperaturermittlung an einer Haspel.

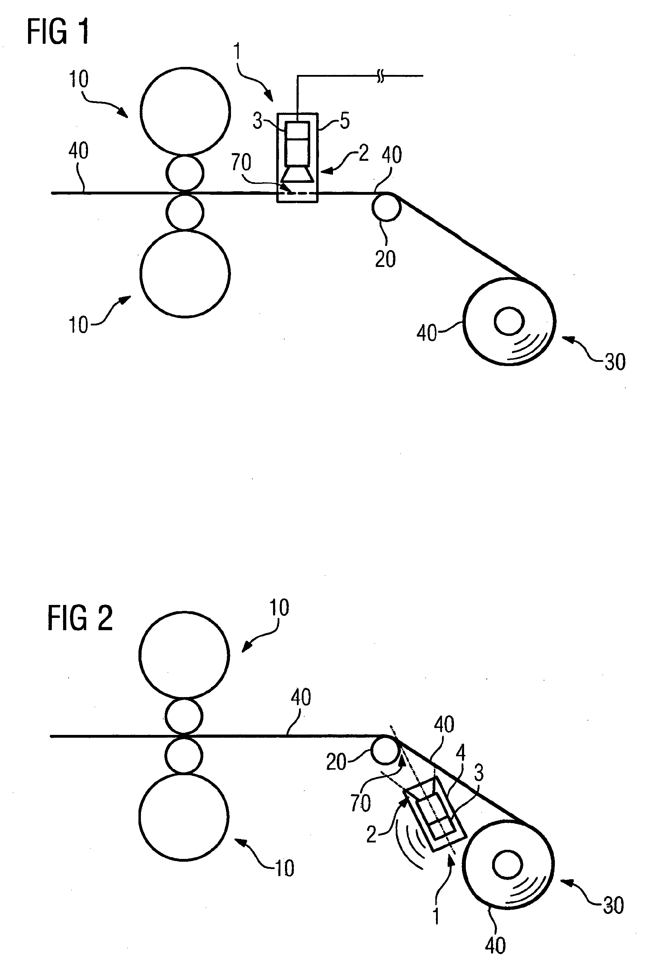

FIG 1 zeigt einen Endbereich einer Warmwalzstraße eines Walzwerks. Der Endbereich weist einen Satz Walzen 10 auf. Der Satz Walzen 10 umfasst ein Paar Stützwalzen und ein Paar Arbeitswalzen. Mittels des Walzensatzes 10 wird Warmband 40 gewalzt.

Nachdem ein Abschnitt des Warmbands 40 die Walzen passiert hat, wird es über eine Führungsrolle 20 auf einen Haspel 30 geführt. Dort wird das Warmband 40 zu einem Coil aufgehaspelt.

Für die Eigenschaften des hergestellten Warmbands 40 ist es wesentlich, die Temperatur des Warmbands 40 kurz vor dem Aufhaspelvorgang zu kennen. Denn diese ist u.a. maßgeblich für die Eigenschaften des hergestellten Warmbandes 40. Zur Bestimmung der Temperatur des Warmbandes 40 ist eine Vorrichtung 1 zur Ermittlung der Temperatur vorgesehen.

Die Vorrichtung 1 ist in FIG 1 zwischen dem Walzensatz 10 und der Führungsrolle 20 angeordnet. Die Vorrichtung 1 umfasst einen Infrarotdetektor 2, mit welchem vom Warmband 40 emittierte elektromagnetische Strahlung im Infrarotbereich erfasst werden kann. Vorzugsweise ist der Infrarotdetektor 2 möglichst nah am Warmband 40 angeordnet. In FIG 1 ist dem Infrarotdetektor 2 eine Auswerteeinrichtung 3 direkt nachgeordnet. Im vorliegenden Ausführungsbeispiel bilden der Infrarotdetektor 2 und die Auswerteeinheit 3 eine bauliche Einheit. Die Auswerteeinheit 3 ist vorzugsweise mit einer zentralen Steuer- und/oder Regeleinrichtung der Warmwalzstrasse verbunden. So können die ermittelten Temperaturen für das Warmband 40 für Regelungszwecke der Warmwalzstraße verwendet werden.

In FIG 1 ist ferner eine Abschattungseinrichtung 5 dargestellt. Die Abschattungseinrichtung 5 ist derart ausgebildet, dass möglichst wenig Streulicht aus der Umgebung des Warmbandes 40 auf den Messbereich des Warmbandes 40 trifft. Der abgeschattete Teil des Warmbandes 40, welcher durch die Abschattungseinrichtung 5 abgeschattet ist, ist mit dem Bezugszeichen 70 versehen.

Der Infrarotdetektor 2 ist auf den abgeschatteten Teil des Messbereichs 70 ausgerichtet. Durch Erfassung der vom Warmband 40 im abgeschatteten Messbereich 70 emittierten elektromagnetischen Strahlung wird die Messgenauigkeit einer kontaktlosen Temperaturmessung für das Warmband 40 signifikant zu erhöht. In FIG 1 ist der Messbereich durch die Abschattungseinrichtung 5 im Wesentlichen vollständig abgeschattet. Die im abgeschatteten Messbereich vom Warmband 40 abgestrahlte elektromagnetische Strahlung ist im Wesentlichen identisch mit der Strahlung eines Schwarzen Körpers gleicher Temperatur, was eine kontaktlose Temperaturermittlung mit hoher Genauigkeit erlaubt.

Der Detektor 2 ist zur ortsaufgelösten Erfassung der vom Warmband 40 emittierten elektromagnetischen Strahlung ausgebildet. Dadurch kann gewährleistet werden, dass mittels der Auswerteeinrichtung 3 derjenige Strahlungsanteil ausgewertet wird, der die größte Strahlungsintensität aufweist.

Bevorzugt wird derjenige abgeschattete Punkt des Warmbands 40 zur Temperaturermittlung genutzt, der die höchste Strahlungsintensität aufweist. Dies liegt darin begründet, dass kein Körper stärker strahlen kann als ein Schwarzer Körper, d.h. derjenige Ort mit der höchsten Strahlungsintensität ist in seinen Eigenschaften denen eines Schwarzen Körpers am ähnlichsten.

Durch die gesonderte Abschattungseinrichtung 5 kann gezielt ein abgeschatteter Bereich zur Bestimmung der Temperatur des Warmbands 40 bereitgestellt werden. Die Abschattungseinrichtung 5 kann an einem beliebigen, i.d.R. für die Temperaturermittlung wesentlichen Abschnitt der Warmwalzstraße angeordnet werden. Eine kontaktlose Temperaturmessung mit hoher Messgenauigkeit kann so flexibel an einem oder mehreren verschiedenen Orten entlang der Warmwalzstraße durchgeführt werden.

FIG 2 zeigt ebenfalls eine schematische Seitenansicht eines Endbereichs einer Walzstraße, insbesondere Warmwalzstraße. Der dargestellte Endbereich in FIG 2 unterscheidet sich von dem in FIG 1 dargestellten Endbereich dadurch, dass keine gesonderten Mittel zur Abschattung vorgesehen sind, sondern die Abschattung durch ohnehin vorhandene bauliche Mittel der Warmwalzstraße erreicht wird. In FIG 2 wird eine nicht dargestellte Schattenfuge durch eine Führungsrolle 20 und Warmband 40 gebildet.

Die in FIG 2 gezeigte Vorrichtung 1 zur Ermittelung der Temperatur des Warmbandes 40 umfasset einen Detektor 2 zur Erfassung von elektromagnetischer Strahlung, welche von der Schattenfuge emittiert wird, sowie eine Auswerteeinheit 3 zur Auswertung der erfassten Strahlung bzw. der der Strahlung zugeordneten Signale. Der Detektor ist auf die in FIG 2 nicht dargestellte Schattenfuge ausgerichtet. Ferner umfasst die Vorrichtung 1 zur Ermittlung der Temperatur des Warmbandes 40 eine Kühleinrichtung 4. Die Kühleinrichtung 4 ist derart ausgestaltet, dass eine bestimmte Betriebstemperatur des Detektors 2 bzw. der Auswerteeinheit 3 eingestellt wird bzw. eine kritische Temperatur nicht überschritten wird. Durch die Kühleinrichtung 4 ist es möglich, die Vorrichtung 1 zur Ermittlung der Temperatur auch nah am Warmband 40 anzuordnen, ohne dass die hohen Temperaturen des Bandes sich nachteilig auf die Temperaturmessung auswirken. Vorteilhafterweise ist die Kühleinrichtung 4 als Wasserkühleinrichtung ausgebildet.

Ferner ist die Vorrichtung 1 zur Ermittlung der Temperatur des Warmbands 40 zur kontaktlosen Übertragung von der Temperaturmessung zugeordneten Daten bzw. Signalen an eine Empfangsstation, welche vorzugsweise mit einer nicht dargestellten Steuer- und/oder Regeleinrichtung für die Warmwalzstraße verbunden ist, ausgebildet. Eine Kühleinrichtung 4 für die Vorrichtung 1 zur Ermittlung der Temperatur eines Warmbandes 40 kann unabhängig von der Anordnung der Vorrichtung 1 zur Ermittlung der Temperatur vorgesehen werden.

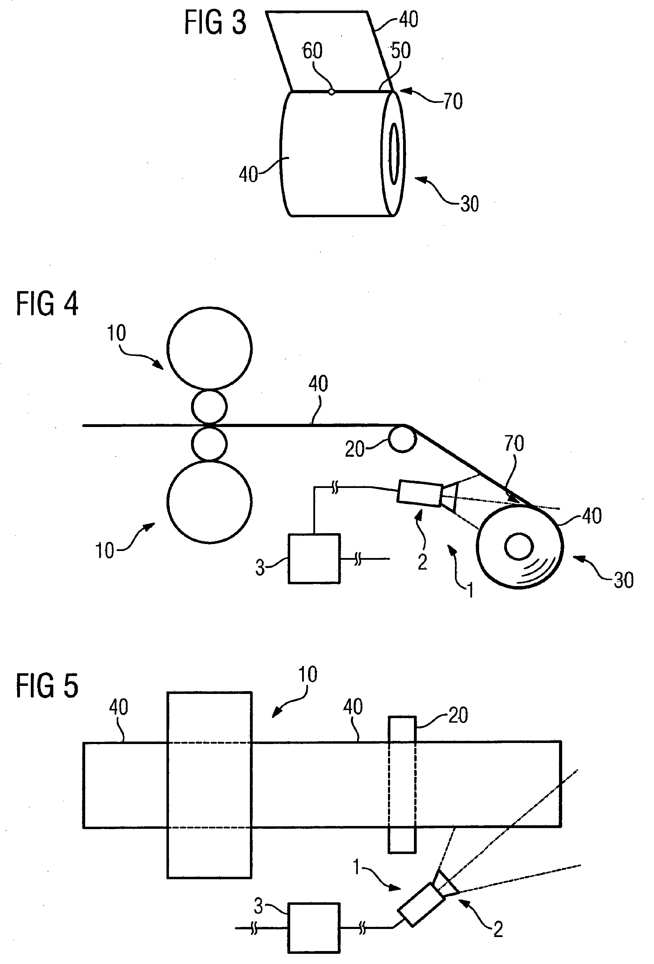

FIG 3 zeigt eine Haspel mit aufgehaspeltem Warmband 40. Das Warmband 40 weist einen bereits aufgehaspelten Abschnitt eines Warmbandes 40 auf sowie einen noch aufzuhaspelnden bzw. bereits abgehaspelten Abschnitt des Warmbandes 40 auf. Der zu haspelnde Bandabschnitt bildet zusammen mit dem gehaspelten Bandabschnitt einen als Schattenfuge 50 ausgebildeten abgeschatteten Teil 70 eines Messbereichs aus. Dieser abgeschattete Teil 70 des Messbereichs in Form einer Schattenfuge 50 kann bevorzugt für eine Temperaturmessung genutzt werden. Der abgeschattete Teil 70 des Messbereichs ist in FIG 3 kleiner als der gesamte Messbereich.

Im in FIG 3 gezeigten Ausführungsbeispiel wird der abgeschattete Teil 70 des Messbereichs nur durch das Walzband 40 selbst gebildet. Durch eine derartige Messanordnung wird der Fehler bei der Temperaturmessung weiter reduziert. Insbesondere kann durch eine ortsaufgelöste Erfassung eines Messbereichs, in welchem die Schattenfuge 50 vorzugsweise zu großem Anteil erfasst ist, ein Punkt 60 des Warmbands 40 mit höchster Strahlungsintensität für die Temperaturmessung genutzt werden. Dieser Punkt 60 des Warmbandes 40 weist Eigenschaften auf, welche denen eines Schwarzen Körpers, insbesondere hinsichtlich der Abstrahlung von elektromagnetischer Strahlung, am nahesten kommen. So wird vorzugsweise aus der vom Punkt 60 abgestrahlten Strahlung eine Temperatur des Warmbands 40 ermittelt.

FIG 4 zeigt eine Seitenansicht eines Endbereichs einer Warmwalzstraße bei der das in FIG 3 gezeigte Prinzip zur Temperaturermittlung eines Warmbands 40 verwendet wird. Hierzu ist nahe der Haspel 30 ein von der Vorrichtung 1 zur Temperaturermittlung aufgewiesener Detektor 2 angeordnet. Der Detektor 2 ist mit einer Auswerteeinheit 3 verbunden. In FIG 4 sowie in FIG 5 sind der Detektor 2 und die Auswerteeinheit 3 baulich getrennt voneinander realisiert. Der Detektor 2 ist derart auf das Warmband 40 bzw. die Haspel 30 ausgerichtet, dass dieser die durch den gehaspelten Abschnitt des Warmbandes 40 und den zu haspelnden Abschnitt des Warmbandes 30 gebildeten abgeschatteten Teil 70 des Messbereichs, hier eine Schaltenfuge, wenigstens in Teilen erfasst werden kann. Vorzugsweise wird der abgeschattete Teil 70 des Messbereichs vollständig durch den Detektor 2 erfasst. Dadurch ist sichergestellt, dass die vom abgeschatteten Teil 70 des Messbereichs emittierte elektromagnetische Strahlung in bestmöglicher Weise zur Temperaturermittlung des Warmbandes 40 verwendet werden kann.

Für das in FIG 4 und FIG 5 in unterschiedlichen Ansichten gezeigte Ausführungsbeispiel ist der Detektor 2 der Vorrichtung 1 zur Ermittlung der Temperatur seitlich des Warmbandes 40 angeordnet und auf die durch den zu haspelnden Abschnitt des Warmbandes 40 und den gehaspelten Abschnitt des Warmbandes 40 gebildete Schattenfuge ausgerichtet. Dadurch wird der Einfluss der Temperatur des Warmbandes 40 auf den Betrieb des Detektors 2 gering gehalten. Alternativ kann auch hier eine Kühleinrichtung 4 für den Detektor 2 vorgesehen werden.

Die Ausführungsbeispiele zeigen eine Auswahl möglicher Umsetzungen zur Anordnung und zum Betrieb einer Vorrichtung zur Ermittlung einer Temperatur eines warmen Objekts, insbesondere eines metallischen Warmbandes. Die erfindungsgemäße Temperaturmessung setzt voraus, dass ein Messbereich des Messobjekts wenigstens teilweise, vorzugsweise durch sich selbst, beschattet ist und sich vorzugsweise abschnittsweise selbst umgibt. Dadurch kann die in der Regel unbekannte oder nur unzureichend bekannte Größe Emissionsfaktor, welche zu einer genauen Temperaturbestimmung aus abgestrahlter elektromagnetischer Strahlung erforderlich ist, "eliminiert" werden.

Durch die erfindungsgemäße Abschattung entsteht im Messbereich wenigstens ein Messfleck, d.h. Messpunkt oder Messbereich, der nahezu eine Schwarzkörperstrahlung, und damit einen Emissionsfaktor von nahezu 1, aufweist. Als auszuwertenden Messsignal wird vorzugsweise dasjenige verwendet, welches der höchsten Strahlungsintensität des abgeschatteten Messbereichs zuzuordnen ist. Denn kein realer Körper kann stärker abstrahlen als ein schwarzer Körper. Dadurch wird eine hohe Genauigkeit bei der Temperaturmessung erreicht, die durch bisherige kontaktlose Temperaturmessungen nicht möglich ist.

## Patentansprüche

1. Warmwalzstraße umfassend eine Haspel (30) und eine Vorrichtung (1) zur Ermittlung einer Temperatur eines Warmwalzgutes, mit einem Detektor(2) zur Erfassung von, von einem Messbereich des Warmwalzgutes (40) abgestrahlter elektromagnetischer Strahlung, mit einer Auswerteeinheit (3) zur Bestimmung einer Temperatur aus der erfassten Strahlung, wobei der Messbereich wenigstens teilweise durch das Warmwalzgut (40) abgeschattet ist,
**dadurch gekennzeichnet, dass** der abgeschattete Teil (70) des Messbereichs durch eine zwischen einem auf- oder abzuhaspelnden Abschnitt und einem aufgehaspelten Abschnitt des Warmwalzguts (40) angeordnete Schattenfuge gebildet ist.

2. Warmwalzstraße nach Anspruch 1,
**dadurch gekennzeichnet, dass** der Messbereich des Detektors (2) linien- oder flächenförmig ausgebildet ist.

3. Warmwalzstraße nach Anspruchs 2,
**dadurch gekennzeichnet, dass** der Detektor (2) zur ortsaufgelösten Erfassung der vom Messbereich abgestrahlten Strahlung ausgebildet ist.

4. Warmwalzstraße nach einem der Ansprüche 1 bis 3,
**dadurch gekennzeichnet, dass** die Auswerteeinheit (3) zur Ermittlung eines Ortes einer höchsten Strahlungsintensität aus der ortsaufgelöst erfassten Strahlung sowie zur Ermittlung einer Temperatur aus einer diesem Ort zugeordneten Strahlung ausgebildet ist.

5. Warmwalzstraße nach einem der Ansprüche 1 bis 4,
**dadurch gekennzeichnet, dass** der Detektor (2) zur spektralen Erfassung der vom Messbereich abgestrahlten Strahlung ausgebildet ist.

6. Warmwalzstraße nach einem der Ansprüche 1 bis 5,
**dadurch gekennzeichnet, dass** der Detektor (2) zur Erfassung von Infrarot-Strahlung ausgebildet ist.

7. Warmwalzstraße nach einem der Ansprüche 1 bis 6,
**gekennzeichnet durch** eine Kühleinrichtung (4) zur Kühlung des Detektors (2) und/oder der Auswerteeinheit (3).

8. Verfahren zur Steuerung und/oder Regelung einer Haspel-Temperatur eines Warmwalzguts (40) bei einer Warmwalzstraße nach einem der vorhergehenden Ansprüche.

## Claims

1. Hot rolling train comprising a coiler (30) and a device (1) for determining a temperature of a hot-rolled material, having a detector (2) for detecting electromagnetic radiation emitted by a measurement region of the hot-rolled material (40), and with an evaluation unit (3) for determining a temperature from the detected radiation, the measurement region being at least partially shadowed by the hot-rolled material (40), **characterized in that** the shadowed part (70) of the measurement region is formed by a shadow joint arranged between a coiled or uncoiled section and a coiled section of the hot-rolled material (40).

2. Hot rolling train according to Claim 1, **characterized in that** the measurement region of the detector (2) is of linear or two-dimensional design.

3. Hot rolling train according to Claim 2, **characterized in that** the detector (2) is designed for the spatially resolved detection of the radiation emitted by the measurement region.

4. Hot rolling train according to one of Claims 1 to 3, **characterized in that** the evaluation unit (3) is designed for determining a location of maximum radiation intensity from the radiation detected with spatial resolution, and for determining a temperature from a radiation assigned to this location.

5. Hot rolling train according to one of Claims 1 to 4, **characterized in that** the detector (2) is designed for the spectral detection of the radiation emitted by the measurement region.

6. Hot rolling train according to one of Claims 1 to 5, **characterized in that** the detector (2) is designed for detecting infrared radiation.

7. Hot rolling train according to one of Claims 1 to 6, **characterized by** a cooling device (4) for cooling the detector (2) and/or the evaluation unit (3).

8. Method for the open-loop and/or closed-loop control of a coiler temperature of a hot-rolled material (40) on a hot rolling train according to one of the preceding claims.

## Revendications

1. Train de laminoir à chaud comprenant une bobineuse ( 30 ) et un dispositif ( 1 ) de détermination d'une température d'un produit à laminer à chaud, ayant un détecteur ( 2 ) de détection du rayonnement électromagnétique émis par une zone de mesure du produit ( 40 ) à laminer à chaud, une unité ( 3 ) d'exploitation pour la détermination d'une température à partir du rayonnement détecté, la zone de mesure étant occultée au moins en partie par le produit ( 40 ) à laminer à chaud,
**caractérisé en ce que** la partie ( 70 ) occultée de la zone de mesure est formée par un joint d'occultation, disposé entre un tronçon à bobiner ou à débobiner et un tronçon bobiné du produit ( 40 ) à laminer à chaud.

2. Train de laminoir à chaud suivant la revendication 1,
**caractérisé en ce que** la zone de mesure du détecteur ( 2 ) est constitué sous la forme d'une ligne ou d'une surface.

3. Train de laminoir à chaud suivant la revendication 2,
**caractérisé en ce que** le détecteur ( 2 ) est constitué pour la détection avec résolution dans l'espace du rayonnement émis par la zone de mesure.

4. Train de laminoir à chaud suivant l'une des revendications 1 à 3,
**caractérisé en ce que** l'unité ( 3 ) d'exploitation est constituée pour la détermination d'un emplacement d'une intensité la plus grande du rayonnement détecté avec résolution dans l'espace, ainsi que pour la détermination d'une température d'un rayonnement associé à cet emplacement.

5. Train de laminoir à chaud suivant l'une des revendications 1 à 4,
**caractérisé en ce que** le détecteur ( 2 ) est constitué pour la détection spectrale du rayonnement émis par la zone de mesure.

6. Train de laminoir à chaud suivant l'une des revendications 1 à 5,
**caractérisé en ce que** le détecteur ( 2 ) est constitué pour la détection du rayonnement infrarouge.

7. Train de laminoir à chaud suivant l'une des revendications 1 à 6,
**caractérisé par** un dispositif ( 4 ) de refroidissement du détecteur ( 2 ) et/ou de l'unité ( 3 ) d'exploitation.

8. Procédé de commande et/ou de régulation d'une température d'une bobineuse d'un produit ( 40 ) à laminer à chaud dans un train de laminoir à chaud suivant l'une des revendications précédentes.
